(19) Europäisches Patentamt
European Patent Office
Office européen des brevets

(11) **EP 2 308 634 A1**

(12) **EUROPEAN PATENT APPLICATION**

(43) Date of publication:
**13.04.2011 Bulletin 2011/15**

(51) Int Cl.:
*B23K 35/36* (2006.01)   *B23K 35/362* (2006.01)
*B23K 35/365* (2006.01)   *B23K 35/40* (2006.01)

(21) Application number: **10013321.4**

(22) Date of filing: **05.10.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.10.2009 JP 2009233679**

(71) Applicant: **Kabushiki Kaisha Kobe Seiko Sho Hyogo 651-8585 (JP)**

(72) Inventors:
• **Toyoda, Emiko**
  **Fujisawa-shi**
  **Kanagawa 251-0014 (JP)**

• **Masaie, Norio**
  **Fujisawa-shi**
  **Kanagawa 251-0014 (JP)**
• **Itou, Kazuhiko**
  **Fujisawa-shi**
  **Kanagawa 251-0014 (JP)**

(74) Representative: **Müller-Boré & Partner Patentanwälte**
  **Grafinger Straße 2**
  **81671 München (DE)**

(54) **Titanium oxide material for welding materials, flux-cored wire, covered electrode, and submerged arc welding flux**

(57) A titanium oxide material for welding materials contains titanium oxide particles having aspect ratios (ratios of the largest dimension to the shortest dimension) of 2.6 to 3.5 in a content of 3 to 20 percent by mass based on the total mass of the titanium oxide material and contains substantially no titanium oxide particles having aspect ratios of more than 3.5. The titanium oxide material is used as a raw material for flux-cored wires, covered electrodes, and submerged arc welding fluxes. The resulting welding materials have improved fluidity of flux particles and do not suffer from segregation of titanium oxide particles in the fluxes.

FIG. 2

**Description**

The present invention relates to a titanium oxide material for welding materials, and to a flux-cored wire, a covered electrode, and a submerged arc welding flux each using the titanium oxide material. Specifically, the present invention relates to a titanium oxide material for welding materials, which gives a flux having improved fluidity of flux particles and not suffering from segregation of titanium oxide particles in the flux; and to a flux-cored wire, a covered electrode, and a submerged arc welding flux each using the titanium oxide material.

Titanium oxide has been customarily used as a raw material for welding materials. Typically, Japanese Unexamined Patent Application Publication (JP-A) No. 2008-49357, JP-A No. 2003-145291, and JP-A No. 2000-343277 disclose techniques for stabilizing arc during welding to thereby suppress "sputtering", by adding titanium oxide as a raw material to a flux-cored wire and controlling the content of titanium oxide in the wire within an appropriate range. JP-A No. H11 (1999) -151592 discloses that slag can be more satisfactorily detached after welding by specifying the content of titanium oxide in a flux-cored wire within an appropriate range.

Independently, JP-ANo. 2004-1048 and JP-ANo. 2002-346791 disclose that a covered electrode (welding rod) has higher lubricity on its surface to be applied to a workpiece more satisfactorily upon manufacturing,by controlling the particle diameter of titanium oxide to be added to a coating flux as small as 1 μm or less.

In JP-A No. 2000-254796, the present inventors disclose that a flux-cored welding wire can maintain satisfactory flux fluidity and arc stability without moisture absorption of the flux, by adding an appropriate amount of titanium oxide to the flux-cored welding wire and specifying the ratio by weight between rutile titanium oxide and anatase titanium oxide contained in the titanium oxide. The present inventors also disclose that the flux-cored welding wire can have effectively improved fluidity of the flux particles without impairing mechanical properties of the wire, by controlling the average particle size of the titanium oxide within an appropriate range.

However, these known techniques have problems as mentioned below. The techniques disclosed in JP-A No. 2008-49357, JP-A No. 2003-145291, JP-A No. 2000-343277, JP-A No. H11-151592, and JP-A No. 2000-254796 are intended to improve arc stability and fluidity of flux particles and to improve slag detachability by specifying the content of titanium oxide in the flux wire within an appropriate range. However, a flux-cored wire may suffer from inferior fluidity of flux particles to thereby cause a large variation in filling rate of the flux in the wire or may suffer from segregation of the titanium oxide particles in the flux, even when the titanium oxide content in the wire is set within the ranges as disclosed in these related art documents. Accordingly, the resulting flux-cored wire may be obtained in insufficient yields. A possible solution to this problem is to stabilize the flux filling rate typically by lowering the speed of the flux filling line, but this causes another problem, i.e., insufficient productivity of the wire.

Independently, even when a flux is applied to a core wire typically using the same die under the same production conditions in production processes of covered electrodes as disclosed typically in JP-A No. 2004-1048 and JP-A No. 2002-346791, the thicknesses of coatings on the products, i.e., covered electrodes may vary because the flux particles show insufficient fluidity and/or the titanium oxide particles segregate in the coated flux. Accordingly, the product welding materials (covered electrodes) vary in quality because, for example, the thicknesses of coatings become larger, i.e., the diameters of the covered electrodes become larger, than the die diameter when coating dies having different diameters are used. In addition, even when coating dies having the same die diameter are used, problems such that the products have diameters larger than a predetermined diameter (predetermined diameter) occur, and it is difficult to pack a specific weight of the product wires in a container. Thus, the products are obtained in low yields.

The insufficient fluidity of the flux particles may cause the flux coating pressure to be instable or to be gradually increased, and this may ultimately cause the flux coating apparatus to be unusable. A possible solution to this problem is to stabilize the coating pressure by lowering the coating speed of the flux, but this causes another problem, i.e., insufficient productivity of the covered electrodes.

The segregation of titanium oxide particles in the flux causes an increased generation rate of dust (particles having particle sizes under the product specification) and/or causes the particle sizes of flux after granulation to be larger or smaller than the target size typically in a granulation process for the production of submerged arc welding fluxes. In this case, a larger proportion of the flux after granulation becomes powdery to reduce the amount of the flux to be reused, and/or the products are obtained in lower yields to thereby lower the production cost.

Furthermore, the variation in flux filling rate and the segregation of the titanium oxide particles in the flux in flux-cored wires and covered electrodes cause the resulting welding materials to show insufficient re-ignition ability and arc stability during welding to thereby have inferior weldability.

The present invention has beenmade in view of these problems of known techniques, and an object of the present invention is to provide a titanium oxide material for welding materials, which titanium oxide material gives a flux containing particles that have improved fluidity and do not segregate in the flux. Another object of the present invention is to provide a flux-coredwire, acoveredelectrode, andasubmergedarcwelding flux each using the titanium oxide material.

Specifically, the present invention provides, in an embodiment, a titanium oxide material for welding materials, in which the titanium oxide material comprises titanium oxide particles having aspect ratios (ratios of the largest dimension to the shortest dimension) of 2.6 to 3.5 in a content of 3 to 20 percent by mass based on the total mass of the titanium oxide material, and the titanium oxide material contains substantially no titanium oxide particles having aspect ratios of more than 3.5.

In the titanium oxide material for welding materials, the content of the titanium oxide particles having aspect ratios of 2.6 to 3.5 is preferably 3 to 14 percent by mass based on the total mass of the titanium oxide material.

The present invention further provides, in another embodiment, a flux-cored wire which includes a sheath; and a flux mixture filled in the sheath, the flux mixture containing the titanium oxide material, and one or more other flux raw materials.

The present invention provides, in still another embodiment, a covered electrode for shielded metal arc welding, which includes a metal core rod; and a coating covering the metal core rod, the coating being a dried kneadate containing the titaniumoxidematerial, one or more other flux rawmaterials, and water glass, the kneadate having been applied to around the metal core rod and dried.

In addition and advantageously, the present invention provides a submerged arc welding flux, which includes the titanium oxide material; and one or more other flux raw materials.

The titanium oxide material for welding materials according to the present invention contains an appropriate amount of titanium oxide particles having specific aspect ratios. Thus, the titanium oxide material, when used as a flux raw material to form a mixture with one or more other flux raw materials, can give welding materials which show satisfactory fluidity of the flux, do not suffer from segregation of titanium oxide particles in the flux, and do not suffer from having inferior productivity and yields.

The welding materials can show satisfactory re-ignition ability and arc stability during welding, because the welding materials do not suffer from segregation of titanium oxide particles.

In addition, the flux-cored wire, covered electrode, and submerged arc welding flux each according to the present invention do not suffer from segregation of titanium oxide particles in the flux, and these welding materials thereby do not suffer from having inferior productivity and yields. The flux-cored wire and covered electrode can maintain re-ignition ability and arc stability during welding at good levels. The submerged arc welding flux can have a reduced generation rate of dust (particles having particle sizes under the product specification), and the flux after granulation shows a reduced powdering rate (proportion of particles becoming powdery).

Fig. 1 is a schematic view of a titanium oxide material for welding materials, according to an embodiment of the present invention; and

Fig. 2 is a perspective view of a fume collector used in examples in the present invention.

The present inventors intensively made experiments and investigations to solve such a problem that, when customary titanium oxide particles having small aspect ratios and having close-to-spherical shapes are used in a welding material (flux), the flux particles show inferior fluidity, and the flux suffers from segregation of the titanium oxide particles therein. As a result, the present inventors found that the aspect ratios (ratios of the largest dimension to the shortest dimension) of titanium oxide particles significantly affect the fluidity of flux particles and the segregation of the titanium oxide particles. In known techniques, titanium oxide particles used in welding materials have been believed to have higher fluidity when they have shapes closer to spherical. Accordingly, techniques of using very fine spherical titaniumoxide particles having particle diameters of 1 $\mu$m or less have been proposed, as disclosed in JP-A No. 2004-1048 and JP-A No. 2002-346791. However, there has been no technique to solve the problems of inferior fluidity of flux particles and of segregation of titanium oxide particles while focusing attention on the aspect ratios of the titanium oxide particles.

Initially, the present inventors made investigations on the shapes of titanium oxide particles, so as to solve such a problem that, when a customary titanium oxide material is used as a welding material, the flux particles show inferior fluidity, the titanium oxide particles segregate in the flux, thereby the welding material is obtained in an insufficient yield and/or shows inferior weldability. Specifically, the present inventors considered that the shapes of titanium oxide particles affect the fluidity of flux particles and the segregation of titanium oxide particles, because customary titanium oxide, used in large amounts particularly in titania flux wires, is used without processing to be powdery. The present inventors considered that the fluidity of fluxparticles can be improved and the segregation of titanium oxide particles in the flux can be prevented by classifying the shapes of titanium oxide particles by aspect ratio and specifying an appropriate range of aspect ratio, and made intensive experiments and investigations. Specifically, the present inventors have found that customary titanium oxide materials are susceptible to the segregationof titanium oxide particles, because titanium oxide particles contained therein have small aspect ratios, are thereby difficult to be entangled with other flux particles, and lower the fluidity of flux particles contrarily.

The present inventors have found a range of aspect ratios of from 2.6 to 3.5 effective to improve the fluidity of flux particles and to prevent the segregation of titanium oxide particles. Specifically, the present inventors have found that titanium oxide particles having relatively large aspect ratios and having elongated shapes, when used as a raw material for welding materials, can be entangled properly with other flux particles to improve fluidity of the both, to thereby improve the fluidity of the entire flux. This also prevents the segregation of titanium oxide particles in the flux. However, when all the titanium oxide particles have aspect ratios within the preferred range, this increases the collision frequency between other flux particles and the titanium oxide particles to thereby lower the fluidity of flux particles contrarily and to cause the segregation of titanium oxide particles more frequently. The present inventors therefore made investigations on the content of the titanium oxide particles having aspect ratios within the preferred range and have found that the fluidity of flux particles can be effectively improved and the segregation of titanium oxide particles can be prevented by controlling a titanium oxide material to contain titanium oxide particles having aspect ratios in the range of 2.6 to 3.5 in a content of 3 to 20 percent by mass based on the total mass of the titanium oxide material and to contain substantially no titanium oxide particles having aspect ratios of more than 3.5.

Specifically, welding materials produced by using a flux containing both the titanium oxide material according to the present invention and one or more other flux raw materials can have improved fluidity of flux particles, do not suffer from the segregation of titanium oxide particles in the flux, and thereby do not suffer from decrease in yield and productivity. Typically, the titanium oxide material according to the present invention can give a flux-coredwire showing a reduced variation in flux filling rate; a covered electrode not suffering from a variation in thickness of coating (diameter of the coated product) with respect to the specific size; and a flux-cored wire and a covered electrode maintaining the re-ignition ability and arc stability at satisfactory levels.

Additionally, a submerged arc welding flux containing the titanium oxide material according to present invention and one or more other flux raw materials can have a reduced generation rate of dust (particles having particle sizes under the product specification) and have a reduced powdering rate of the flux after granulation. Specifically, close-to-spherical titanium oxide particles have small contact areas with each other and have high contact pressure with each other in the flux after granulation (flux granules), and this increases the powdering rate. According to the present invention, the contact pressure of granulated particles with each other can be reduced to thereby reduce the powdering rate of the flux by incorporating an appropriate amount of titanium oxide particles having elongated shapes into a titanium oxide material for welding materials. Such titanium oxide particles having elongated shapes, when incorporated into a flux, allows the flux to have a reduced generation rate of dust (particles having particle sizes under the product specification), and this not only improves the yield of the product but also increases the amount of reusable flux, thus contributing to effective utilization of resources.

Reasons for specifying numerical values relating to the titanium oxide material according to the present invention will be described below.

"Ratio of largest dimension to shortest dimension of titanium oxide particles (aspect ratio): 2.6 to 3.5"

The aspect ratio of the titanium oxide particles is a most important factor for improving the fluidity of flux particles and preventing the segregation of titanium oxide particles in the resulting welding materials. As is demonstrated above, the shape of titanium oxide particles affects the fluidity of flux particles and the segregation of titanium oxide particles.

Specifically, when the titanium oxide material contains titanium oxide particles having aspect ratios within the range of 2.6 to 3.5 in an amount of 3 to 20 percent by mass based on the total mass of the titanium oxide material, the fluidity of flux particles can be effectively improved, and the

segregation of titanium oxide particles is prevented. According to the present invention, therefore, the aspect ratio effective to improve the fluidity of flux particles and to prevent the segregation of titanium oxide particles is specified to be 2.6 to 3.5, and titanium oxide particles having aspect ratios within this range are contained in an appropriate amount in the titanium oxide material. Titanium oxide particles having aspect ratios less than 2.6 have shapes close to spherical and thereby do not sufficiently effectively help the titanium oxide material to improve the fluidity of flux particles and to prevent the segregation of titanium oxide particles. This causes a flux-cored wire to have a larger variation in flux filling rate and causes a covered electrode to suffer from an unevenly coated flux around a welding rod or to suffer from the segregation of titanium oxide particles in the flux. As a result, these weldingmaterials are liable to have insufficient re-ignition ability and arc stability during welding. In a covered electrode, when fine titanium oxide particles are used, typically when a titanium oxide material containing 100% of titanium oxide particles having particle sizes of 74 $\mu$m or less is used, the diameter of the coated product (covered electrode) is liable to be larger than a predetermined diameter, and this often lowers the yield of the product. The diameter of the coated product becomes larger than the predetermined diameter probablybecause such fine titanium oxide particles are unevenly distributed and enriched in the surface of the coated layer, this impedes escape of gas (water vapor), and whereby water is not sufficiently removed from the coated layer in a drying process after the coating of the flux. A submerged arc welding flux, if using such fine titanium oxide particles, may suffer from an increased generation rate of dust (particles having particle sizes under the product specification) and/or suffer from an increased powdering rate of the flux after granulation. In contrast, titanium oxide particles having excessively elongated shapes and having aspect ratios of more than 3.5, if present in the welding rawmaterial (titanium oxide material), increase the collision frequency between the titanium oxide particles and other flux particles to thereby lower the fluidity of flux particles contrarily, and this may often cause the segregation of titanium oxide particles. Accordingly, the present invention adopts a titanium oxide material containing titanium oxide particles having aspect ratios of 2.6 to 3.5 in an amount of 3 to 20 percent by mass based on the total mass of the titanium oxide material, in order to improve the fluidity of flux particles and to prevent the segregation of titanium oxide particles. The titanium oxide material for welding materials contains substantially no titanium oxide particles having aspect ratios of more than 3.5. The range of aspect ratios of titanium oxide particles varies depending on the place of origin (hereinafter also briefly referred to as "origin") of the titanium oxide material. Even when derived from the same origin, titanium oxide materials may have different ranges of aspect ratios of titanium oxide particles contained therein when they are derived from different veins. Accordingly, to provide a titanium oxide material containing titanium oxide particles having aspect ratios within the specific range specified in the present invention, one or more titanium oxide materials derived from origins or veins are chosen from among two or more different titanium oxide materials derived from different origins or veins, so that the aspect ratios of titanium oxide particles contained in the resulting titanium oxide material fall within the specific range.

"Content of titanium oxide particles having aspect ratios of 2.6 to 3.5: 3 to 20 percent by mass based on the total mass of the titanium oxide material"

The titanium oxide particles having aspect ratios within the preferred range sufficiently help to improve the fluidity of flux particles and to prevent the segregation of titanium oxide particles when contained in an appropriate amount in the titanium oxide material. Titanium oxide particles having aspect ratios of 2.6 to 3.5, if contained in a content of less than 3 percent by mass based on the total mass of the titanium oxide material, do not sufficiently effectively help to improve the fluidity of flux and to prevent the segregation of titanium oxide particles. In contrast, titanium oxide particles having aspect ratios of 2.6 to 3.5, if contained in a content of more than 20 percent by mass based on the total mass of the titanium oxide material, may contrarily lower the fluidity of flux and maycausemore frequent segregationof titaniumoxide particles, because a large amount of titanium oxide particles having elongated shapes are present among close-to-spherical titanium oxide particles. Accordingly, the content of titanium oxide particles having aspect ratios of 2.6 to 3.5 is specified in the present invention to be 3 to 20 percent by mass based on the total mass of the titanium oxide material. In the case of the flux-cored wire and covered electrode, the content of titanium oxide particles having aspect ratios of 2.6 to 3.5 is preferably 3 to 14 percent by mass based on the total mass of the titanium oxide material, so as to improve the re-ignition ability and arc stability. To control the content of titanium oxide particles having aspect ratios within the specific range specified in the present invention, it is enough that one or more different titanium oxide materials are chosen from among two or more different titanium oxide materials derived from different origins or veins, and the proportions of the chosen titanium oxide materials are controlled, so as to allow aspect ratios of titanium oxide particles to be within the range specified herein. Thus, the present invention can be adopted without lowering the productivity.

Examples

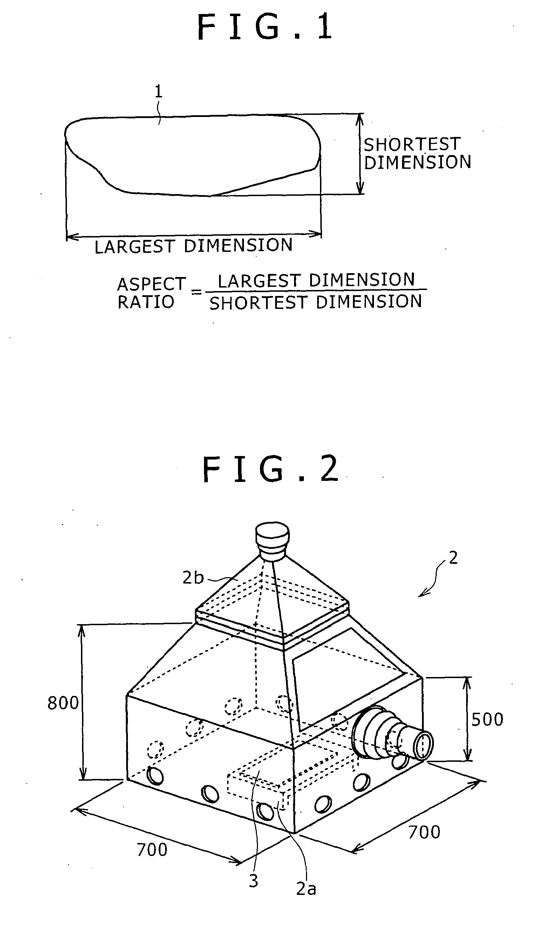

Next, the present invention will be illustrated in further detail with reference to several working examples below, in comparison with corresponding comparative examples, to show advantageous effects of the titanium oxide material for welding materials according to the present invention. In these working examples, titanium oxide materials derived from three origins, i.e., origins A, B, and C and each contain mixtures of titanium oxide particles having different aspect ratios were used. Titanium oxide particles contained in the titanium oxide materials derived from the respective origins were classified into those having aspect ratios of 1.0 or more and less than 2.6, those having aspect ratios of 2.6 or more and less than 3.5, and those having aspect ratios of more than 3.5. The aspect ratio herein is defined as a ratio of the largest dimension (maximum length) to the shortest dimension (maximum width in the direction perpendicular to the direction of the longest dimension) of a titanium oxide particle 1 as shown in Fig. 1. The contents of titanium oxide particles as classified by aspect ratio in the titanium oxide materials derived from the respective origins are shown in Table 1. Titanium oxide materials derived from the origin B are grouped under three groups, i.e., B-1, B-2, and B-3 in Table 1, because the origin B includes three veins, and the titanium oxide materials derived from the different veins differ from one another in contents of titanium oxide particles classified by aspect ratio.

A series of titanium oxide materials according to examples and comparative examples was prepared by using each of the titaniumoxidematerials derived from different origins as shown in Table 1 alone or in combination in different proportions. The proportions of titanium oxide materials grouped by origin, and the contents of titaniumoxide particles classified by aspect ratio in the titanium oxide materials according to the examples and comparative examples are shown in Table 2.

TABLE 1

| Origin of titanium oxide | Content of titanium oxide particles in titanium oxide material classified by aspect ratio (percent by mass) | | |
| --- | --- | --- | --- |
| | Aspect ratio | | |
| | 1.0 or more and less than 2.6 | 2.6 or more and less than 3.5 | more than 3.5 |
| Origin A (customary) | 100 | 0 | 0 |

(continued)

| Origin of titanium oxide | | Content of titanium oxide particles in titanium oxide material classified by aspect ratio (percent by mass) | | |
| --- | --- | --- | --- | --- |
| | | Aspect ratio | | |
| | | 1.0 or more and less than 2.6 | 2.6 or more and less than 3.5 | more than 3.5 |
| Origin B | Vein B-1 | 97 | 3 | 0 |
| | Vein B-2 | 80 | 20 | 0 |
| | Vein B-3 | 91 | 8 | 1 |
| Origin C | | 66 | 34 | 0 |

TABLE 2

| Sample No. | | Proportions of titanium oxide materials classified by origin (percent by mass) | | | | | Contents of titanium oxide particles classified by aspect ratio (percent by mass) | | |
| --- | --- | --- | --- | --- | --- | --- | --- | --- | --- |
| | | | Origin B | | | | Aspect ratio | | |
| | | Origin A | Vein B-1 | Vein B-2 | Vein B-3 | Origin C | 1.0 or more and less than 2.6 | 2.6 or more and less than 3.5 | more than 3.5 |
| Examples | 1 | - | 100 | - | - | - | 97 | 3 | 0 |
| | 2 | - | - | 100 | - | - | 80 | 20 | 0 |
| | 3 | 88 | - | - | - | 12 | 96 | 4 | 0 |
| | 4 | 67 | - | - | - | 33 | 89 | 11 | 0 |
| | 5 | 60 | - | - | - | 40 | 86 | 14 | 0 |
| | 6 | 53 | - | - | - | 47 | 84 | 16 | 0 |
| | 7 | 43 | - | - | - | 57 | 81 | 19 | 0 |
| Customary Example | 8 | 100 | - | - | - | - | 100 | 0 | 0 |
| Comparative Examples | 9 | 20 | 80 | - | - | - | 98 | 2 | 0 |
| | 10 | - | - | - | 100 | - | 91 | 8 | 1 |
| | 11 | - | - | - | - | 100 | 66 | 34 | 0 |
| | 12 | 94 | - | - | - | 6 | 98 | 2 | 0 |
| | 13 | 37 | - | - | - | 63 | 79 | 21 | 0 |

First Embodiment

The first embodiment is an embodiment in which titanium oxide materials were used as flux raw materials for flux-cored wires. Specifically, a series of fluxes was prepared by mixing each of the titanium oxide materials according to the examples and comparative examples in Table 2 with other powdered flux raw materials such as metal fluorides, Si, Mn, Fe, MgO, and Ni. The compositions of the titanium oxide materials and other flux raw materials such as metal fluorides, Si, Mn, Fe, MgO, and Ni in the fluxes according to the examples and comparative examples are shown in Table 4. Each of the fluxes according to the examples and comparative examples was charged into a sheath having the composition given in Table 3, the resulting articles were formed to be cylindrical, and thereby yielded flux-coredwires according to examples and comparative examples. In this process, the flux-cored wires according to the examples and comparative examples were measured on filling rate of flux in the sheath. The flux filling rate was determined by cutting each flux-cored wire according to the examples and comparative examples to a length of 30 cm, measuring the weight of the cut wire as a basis weight, removing the flux from the cut wire, measuring the weight of the wire after removal of the flux, and calculating the flux filling rate according to an equation mentioned below. On each of the flux-cored wires according to the examples and comparative examples, ten cut wires were sampled, flux filling rates of the ten cut wires were measured and averaged, and a deviation of the average flux filling rate from the target flux fillingratewas determined as a flux filling rate variation. Of the flux-cored wires according to the examples and comparative examples, one having a deviation from the target flux filling rate of 0.3% or less was rated as Excellent (A), one having a deviation from the target flux filling rate of more than 0.3% and 0.7% or less was rated as Good (B), and one having a deviation from the target flux filling rate of more than 0.7% was rated as Below Average (C). The results are shown in Table 4.

$$\text{Flux filling rate} = [(\text{Basis weight}) - (\text{Wire weight after removal of flux})]/(\text{Basis weight})$$

Independently, $CO_2$-gas-shielded arc welding was performed using each of the flux-cored wires according to the examples and comparative examples, and arc stability was rated. The arc stability can be rated based on the generation rate of fumes, because the generation rate of fumes increases if arc becomes unstable during arc welding. The generation rate of fumes was measured in accordance with the "Method of Measuring Total Amount of Weld Fumes Generated by Covered Electrodes." prescribed in Japanese Industrial Standards (JIS) Z 3930. Specifically, as illustrated in Fig. 2, welding was performed on a specimen 3 placed on a welding table 2a, fumes generated during welding were collected using a fume collector 2 through a sampler 2b arranged on the top of the collector, and the generation rate of fumes was measured. The amount of fumes generated per unit time was measured each three times, and three measurements were averaged to give an average fume amount, based on which the arc stability was rated. A sample having an average fume amount generated per one minute of 450 mg or less was rated as Excellent (A), one having an average fume amount generated per one minute of more than 450 mg and 480 mg or less was rated as Good (B), and one having an average fume amount generated per one minute of more than 480 mg was rated as Below Average (C). The results are shown in Table 4. The $CO_2$-gas-shielded arc welding was performed under the following welding conditions:

Welding Conditions
Polarity: direct-current wire plus
Welding current: 300 A
Welding voltage: 31 V
Welding rate: 30 cm per minute
Shielding gas: 100%-$CO_2$, 25 liters per minute
Tip-workpiece distance: 25 mm
Welding position: downward bead-on-plate
Specimen: JIS G 3106 SM490A (rolled steel for welded structures)

In addition, the flux-cored wires according to the examples and comparative examples were rated as overall rating. Specifically, one rated as Excellent (A) both in flux filling rate variation and in arc stability was rated as Excellent (A) in overall rating; one rated as Good (B) both in flux filling rate variation and in arc stability or rated as Excellent (A) in one of them and as Good (B) in the other was rated as Good (B) in overall rating; and one rated as Below Average (C) in at least one of flux filling rate variation and arc stability was rated as Below Average (C) in overall rating. The overall ratings in flux filling rate variation and arc stability of the flux-cored wires according to the examples and comparative examples are also shown in Table 4.

TABLE 3

| Composition of sheath (percent by mass) | | | | | |
|---|---|---|---|---|---|
| C | Si | Mn | Al | Ti | Fe and inevitable impurities |
| 0.07 | 0.20 | 0.40 | 0.02 | 0.03 | remainder |

Table 4

| Sample number | | Flux composition (percent by mass) | | | | | | | | | Variation in flux filling rate | Fume amount | Overall rating |
|---|---|---|---|---|---|---|---|---|---|---|---|---|---|
| | | Titanium oxide | | Metal fluoride | Si | Mn | Fe | MgO | Ni | Others | | | |
| | | Number in Table 2 | Composition | | | | | | | | | | |
| Examples | 14 | 1 | 41.0 | 0.5 | 10.0 | 8.0 | 29.0 | 3.0 | 2.0 | 6.5 | A | A | A |
| | 15 | 2 | | | | | | | | | B | B | B |
| | 16 | 3 | | | | | | | | | A | A | A |
| | 17 | 4 | | | | | | | | | A | A | A |
| | 18 | 5 | | | | | | | | | A | A | A |
| | 19 | 6 | | | | | | | | | B | B | B |
| | 20 | 7 | | | | | | | | | B | A | B |
| | 21 | 3 | 53.0 | 0.4 | 12.0 | 4.0 | 18.0 | 6.0 | 3.0 | 3.6 | A | A | A |
| | 22 | 4 | | | | | | | | | A | A | A |
| | 23 | 5 | | | | | | | | | A | A | A |
| | 24 | 6 | | | | | | | | | B | B | B |
| | 25 | 7 | | | | | | | | | B | B | B |
| Customary Example | 26 | 8 | 41.0 | 0.5 | 10.0 | 8.0 | 29.0 | 3.0 | 2.0 | 6.5 | C | C | C |
| Comparative Examples | 27 | 9 | | | | | | | | | A | C | C |
| | 28 | 10 | | | | | | | | | C | B | C |
| | 29 | 11 | | | | | | | | | C | C | C |
| | 30 | 12 | | | | | | | | | B | C | C |
| | 31 | 13 | | | | | | | | | C | B | C |
| | 32 | 12 | 53.0 | 0.4 | 12.0 | 4.0 | 18.0 | 6.0 | 3.0 | 3.6 | C | C | C |
| | 33 | 13 | | | | | | | | | B | C | C |

8

EP 2 308 634 A1

As is demonstrated by Table 4, Samples (Examples) Nos. 14 to 25 used titanium oxides as flux raw materials, which titanium oxides contained titanium oxide particles having aspect ratios of 2.6 to 3.5 in contents within the range specified in the present invention and did not contain titanium oxide particles having aspect ratios of more than 3.5. These samples thereby showed less variation (higher stability) of the flux filling rate and/or more satisfactory arc stability than Customary Example No. 26 containing no titanium oxide particles having aspect ratios of 2.6 to 3.5 and than Comparative Example No. 27 and Comparative Examples No. 29 to 33 containing titanium oxide particles having aspect ratios of 2.6 to 3.5 but in contents out of the range specified in the present invention. Comparative Example No. 28 contained titanium oxide particles having aspect ratios of 2.6 to 3.5 in a content within the range specified in the present invention, but contained titanium oxide particles having aspect ratios of more than 3.5, and thereby showed inferior stability (large variation) in flux filling rate.

Of Examples Nos. 14 to 25 containing titanium oxide particles having aspect ratios of 2.6 to 3.5 in contents within the range specified in the present invention and containing no titanium oxide particles having aspect ratios of more than 3.5, Examples Nos. 14, 16 to 18, and 21 to 23 contained titanium oxide particles having aspect ratios of 2.6 to 3.5 in contents within the preferred range in the present invention (3 to 14 percent by mass), thereby showed less variation in flux filling rate and lower generation rates of fumes than Examples Nos. 15, 19, 24, and 25 containing titanium oxide particles having aspect ratios of 2.6 to 3.5 in contents within the range specified in the present invention but out of the preferred range, and showed less generation rates of fumes than Example No. 20 containing titanium oxide particles having aspect ratios of 2.6 to 3.5 in a content within the range specified in the present invention but out of the preferred range.

Second Embodiment

The second embodiment is an embodiment in which titanium oxide materials were used as flux raw materials for applying to around core wires to form covered electrodes. Specifically a series of fluxes according to examples and comparative examples was prepared by mixing each of the titanium oxide materials according to the examples and comparative examples in Table 2 with other powdered flux raw materials such as $CaCO_3$, $SiO_2$, MgO, Fe-Mn, and Fe, further adding water glass thereto, and kneading them. The compositions of the titanium oxide materials and other flux raw materials such as $CaCO_3$, $SiO_2$, MgO, Fe-Mn, and Fe in the fluxes according to the examples and comparative examples are shown in Table 5. Next, a series of covered electrodes was prepared by applying each of the fluxes according to the examples and comparative examples to around a mild steel core wire (4.0 mm in diameter and 450 mm in length) prescribed in JIS G 3523, followed by drying at 400°C. The coating thicknesses after drying of the prepared covered electrodes were measured while setting the required value of the coating thickness after drying to 1.15 mm. Covered electrodes having coating thicknesses after drying of more than 1.20 mm were evaluated as rejected products, and the rejected covered electrodes were extracted from products to determine a reject ratio. A sample having a reject ratio of 4% or less was rated as Excellent (A), one having a reject ratio of more than 4% and less than 7% was rated as Good (B), and one having a reject ratio of 7% or more was rated as Failure (D). The product reject ratios and ratings of the covered electrodes according to the examples and comparative examples are also shown in Table 5.

TABLE 5

| Sample number | | | Coating material composition (percent by mass) | | | | | | | | Reject ratio (%) | Rating |
|---|---|---|---|---|---|---|---|---|---|---|---|---|
| | | | Titanium oxide | | $CaCO_3$ | $SiO_2$ | MgO | Fe-Mn | Fe | Others | | |
| | | | Number in Table 2 | Composition | | | | | | | | |
| Examples | | 34 | 1 | 5 | 38 | 4 | 6 | 11 | 34 | 2 | 4 | A |
| | | 35 | 2 | | | | | | | | 5 | B |
| | | 36 | 3 | 14 | 7 | 26 | 4 | 9 | 32 | 8 | 4 | A |
| | | 37 | 4 | | | | | | | | 2 | A |
| | | 38 | 3 | 23 | 10 | 18 | 5 | 8 | 31 | 5 | 1 | A |
| | | 39 | 5 | | | | | | | | 3 | A |
| | | 40 | 6 | | | | | | | | 5 | B |
| | | 41 | 7 | | | | | | | | 6 | B |
| Customary Examples | | 42 | 8 | 5 | 38 | 4 | 6 | 11 | 34 | 2 | 10 | D |
| | | 43 | 8 | 14 | 7 | 26 | 4 | 9 | 32 | 8 | 8 | D |
| Comparative Examples | | 44 | 9 | 5 | 38 | 4 | 6 | 11 | 34 | 2 | 8 | D |
| | | 45 | 10 | 14 | 7 | 26 | 4 | 9 | 32 | 8 | 9 | D |
| | | 46 | 11 | | | | | | | | 11 | D |
| | | 47 | 12 | | | | | | | | 10 | D |
| | | 48 | 10 | 23 | 10 | 18 | 5 | 8 | 31 | 5 | 8 | D |
| | | 49 | 13 | | | | | | | | 9 | D |

As is demonstrated by Table 5, Samples (Examples) Nos. 34 to 41 used titanium oxides as flux raw materials, which titanium oxides contained titanium oxide particles having aspect ratios of 2.6 to 3.5 in contents within the range specified in the present invention and did not contain titanium oxide particles having aspect ratios of more than 3.5. These samples thereby showedmore stable diameters of coatedproducts (covered electrodes) and were obtained in higher yields than Customary Examples Nos. 42 and 43 containing no titanium oxide particles having aspect ratios of 2.6 to 3.5, and than Comparative Examples Nos. 44 and 46 to 49 containing titanium oxide particles having aspect ratios of 2.6 to 3.5 but in contents out of the range specified in the present invention. Comparative Example No. 45 is a comparative example containing titanium oxide particles having aspect ratios of more than 3.5 and showed a higher product reject ratio. This indicates that, even when containing titanium oxide particles having aspect ratios of 2.6 to 3.5 in a content within the range specified in the present invention, a titanium oxide material, if further containing titanium oxide particles having larger aspect ratios of more than 3.5, shows a higher product reject ratio.

Of Examples Nos. 34 to 41 containing titanium oxide particles having aspect ratios of 2.6 to 3.5 in contents within the range specified in the present invention, Examples Nos. 34 and 36 to 39 contained titanium oxide particles having aspect ratios of 2.6 to 3.5 in contents within the preferred range in the present invention and thereby showed lower reject ratios of the product covered electrodes than Examples Nos. 35, 40, and 41 containing titanium oxide particles having aspect ratios of 2.6 to 3.5 in contents within the range specified in the present invention but out of the preferred range.

Third Embodiment

The third embodiment is an embodiment in which titanium oxide materials were adopted as raw materials for submerged arc welding fluxes. Specifically, a series of fluxes according to examples and comparative examples was prepared by mixing each of the titanium oxide materials according to the examples and comparative examples as in Table 2 with other flux raw materials such as CaO, $SiO_2$ $Al_2O_3$, MgO, $CaF_2$, and $CO_2$, adding water glass thereto, and kneading them. The compositions of the titanium oxide materials and other flux raw materials such as CaO, $SiO_2$, $Al_2O_3$, MgO, $CaF_2$, and $CO_2$ in the fluxes according to the examples and comparative examples are shown in Table 6. Next, the fluxes according to the examples and comparative examples were granulated, dried at 400°C, and thereby yielded submerged arc welding fluxes. The submerged arc welding fluxes according to the examples and comparative examples were sieved, the yields as products were determined in terms of mass ratio, and the generation rates of dust (flux particles having particle diameters less than a specific particle diameter) were calculated. A sample having a dust generation rate of less than 6% was rated as Excellent (A), one having a dust generation rate of 6% or more and less than 10% was rated as Good (B), and one having a dust generation rate of 10% or more was rated as Failure (D). The dust generation rates and ratings of the submerged arc welding fluxes according to the examples and comparative examples are also shown in Table 6.

TABLE 6

| Sample number | | | Flux composition (percent by mass) | | | | | | | | | Dust generation rate (percent by mass) | Rating |
|---|---|---|---|---|---|---|---|---|---|---|---|---|---|
| | | Titanium oxide | | CaO | SiO$_2$ | Al$_2$O$_3$ | MgO | CaF$_2$ | CO$_2$ | Others | | | |
| | | Number in Table 2. | Composition | | | | | | | | | | |
| Examples | 50 | 1 | 10 | 12 | 25 | 20 | 17 | 8 | 5 | 3 | 4 | A |
| | 51 | 2 | | | | | | | | | 7 | B |
| | 52 | 5 | | | | | | | | | 5 | A |
| | 53 | 3 | 7 | 11 | 18 | 25 | 21 | 12 | 4 | 2 | 4 | A |
| | 54 | 5 | | | | | | | | | 5 | A |
| | 55 | 7 | | | | | | | | | 8 | B |
| Customary Example | 56 | 8 | | | | | | | | | 11 | D |
| Comparative Examples | 57 | 9 | 10 | 12 | 25 | 20 | 17 | 8 | 5 | 3 | 10 | D |
| | 58 | 10 | | | | | | | | | 12 | D |
| | 59 | 11 | | | | | | | | | 15 | D |
| | 60 | 10 | 7 | 11 | 18 | 25 | 21 | 12 | 4 | 2 | 11 | D |
| | 61 | 12 | | | | | | | | | 10 | D |
| | 62 | 13 | | | | | | | | | 13 | D |

As is demonstrated by Table 6, Samples (Examples) Nos. 50 to 55 used titanium oxides as flux raw materials, which titanium oxides contained titanium oxide particles having aspect ratios of 2.6 to 3.5 in contents within the range specified in the present invention and did not contain titanium oxide particles having aspect ratios of more than 3.5. These samples showed lower dust generation rates and thereby higher (not decreased) yields of products submerged arc welding fluxes than Customary Example No. 56 containing no titanium oxide particles having aspect ratios of 2.6 to 3.5, and than Comparative Examples Nos. 57, 59, 61, and 62 containing titanium oxide particles having aspect ratios of 2.6 to 3.5 but in contents out of the range specified in the present invention. Comparative Examples Nos. 58 and 60 are comparative examples containing titanium oxide particles having aspect ratios of more than 3.5, showed higher dust generation rates, and had lower yields of products. This indicates that, even when containing titanium oxide particles having aspect ratios of 2.6 to 3.5 in contents within the range specified in the present invention, titanium oxide materials, if further containing titanium oxide particles having larger aspect ratios of more than 3.5, show higher dust generation rates and give products in lower yields.

Of Examples Nos. 50 to 55 containing titanium oxide particles having aspect ratios of 2.6 to 3.5 in contents within the range specified in the present invention, Examples Nos. 50 and 52 to 54 contained titanium oxide particles having aspect ratios of 2.6 to 3.5 in contents within the preferred range in the present invention and thereby showed lower dust generation rates than Examples Nos. 51 and 55 containing titanium oxide particles having aspect ratios of 2.6 to 3.5 in contents within the range specified in the present invention but out of the preferred range.

## Claims

1. A titanium oxide material for welding materials, wherein the titanium oxide material comprises titanium oxide particles having aspect ratios (ratios of the largest dimension to the shortest dimension) of 2.6 to 3.5 in a content of 3 to 20 percent by mass based on the total mass of the titanium oxide material, and wherein the titanium oxide material contains substantially no titanium oxide particles having aspect ratios of more than 3.5.

2. The titanium oxide material according to Claim 1, wherein the content of the titanium oxide particles having aspect ratios of 2.6 to 3.5 is 3 to 14 percent by mass based on the total mass of the titanium oxide material.

3. A flux-cored wire comprising:

   a sheath; and
   a flux mixture filled in the sheath, the flux mixture containing the titanium oxide material according to one of Claims 1 and 2, and one or more other flux raw materials.

4. A covered electrode for shielded metal arc welding, comprising:
   a metal core rod; and
   a coating covering the metal core rod, the coating being a dried kneadate containing the titanium oxide material according to one of Claims 1 and 2, one or more other flux raw materials, and water glass, the kneadate having been applied to around the metal core rod and dried.

5. A submerged arc welding flux, comprising:

   the titanium oxide material according to one of Claims 1 and 2; and
   one or more other flux raw materials.

# F I G . 1

SHORTEST DIMENSION

LARGEST DIMENSION

$$\frac{\text{ASPECT}}{\text{RATIO}} = \frac{\text{LARGEST DIMENSION}}{\text{SHORTEST DIMENSION}}$$

# F I G . 2

Europäisches
Patentamt

European
Patent Office

Office européen
des brevets

# EUROPEAN SEARCH REPORT

Application Number

EP 10 01 3321

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2002 346791 A (NIPPON STEEL WELDING PROD ENG) 4 December 2002 (2002-12-04) * abstract * | 1-5 | INV. B23K35/36 B23K35/362 B23K35/365 B23K35/40 |
| A | JP 2000 254796 A (KOBE STEEL LTD) 19 September 2000 (2000-09-19) * abstract * | 1-5 | |
| A | JP 2004 001048 A (NIPPON STEEL & SUMIKIN WELDING) 8 January 2004 (2004-01-08) * abstract * | 1-5 | |
| A | JP 58 041695 A (NIPPON STEEL CORP) 10 March 1983 (1983-03-10) | 1-5 | |
| A | GB 829 686 A (LINCOLN ELECTRIC CO) 2 March 1960 (1960-03-02) * the whole document * | 1-5 | |
| A | US 2002/125236 A1 (MORAVEK VLADIMIR [CA] ET AL) 12 September 2002 (2002-09-12) * the whole document * | 1-5 | TECHNICAL FIELDS SEARCHED (IPC) B23K |

The present search report has been drawn up for all claims

| Place of search | Date of completion of the search | Examiner |
|---|---|---|
| The Hague | 8 December 2010 | Chebeleu, Alice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 01 3321

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2010

| Patent document cited in search report | | Publication date | Patent family member(s) | | Publication date |
|---|---|---|---|---|---|
| JP 2002346791 | A | 04-12-2002 | NONE | | |
| JP 2000254796 | A | 19-09-2000 | JP | 3580720 B2 | 27-10-2004 |
| JP 2004001048 | A | 08-01-2004 | NONE | | |
| JP 58041695 | A | 10-03-1983 | NONE | | |
| GB 829686 | A | 02-03-1960 | NONE | | |
| US 2002125236 | A1 | 12-09-2002 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008049357 A
- JP 2003145291 A
- JP 2000343277 A
- JP H111999151592 A
- JP 2004001048 A
- JP 2002346791 A
- JP 2000254796 A
- JP H11151592 A